# EUROPEAN PATENT SPECIFICATION

(11) **EP 2 314 523 B1**
(45) Date of publication and mention of the grant of the patent: **29.08.2012**
(21) Application number: 10165077.8
(22) Date of filing: 07.06.2007
(51) Int. Cl.: B65D 81/34, B65D 43/18

(54) **Container with pivotable tray**
Behälter mit schwenkbarer Schale
Récipient avec plateau pivotant

(30) Priority: 14.06.2006 GB 0611796; 20.09.2006 GB 0618520; 27.03.2007 GB 0706034
(43) Date of publication of application: 27.04.2011
(62) Divisional of application: 07733111.4
(73) Proprietor: Quodpod Limited, Chiltern Street London W1U 5AN (GB)
(72) Inventor: Davidson, Katie, London, W1U 5AN (GB)
(74) Representative: Bennett, Adrian Robert J.

(56) References cited:
- EP-A1- 0 300 809
- DE-U1- 9 314 114
- FR-A1- 2 854 874

## Description

The present invention relates to a container and, particularly but not exclusively, to a container for cooking food.

Conventionally, the food served to passengers aboard a commercial passenger aircraft or to patients in a hospital, for example, will have been previously cooked and packaged for reheating immediately before serving. This has the disadvantage of resulting in a meal of low nutritional value and having poor taste and texture qualities, and also results in undesirably large quantities of waste packaging being generated.

FR 2854874 discloses a box having a number of sections with compartments. The sections can be pivoted relative to one another to open the compartments. The pivot points are formed of magnets.

It is an object of the present invention to provide a container for allowing food to be provided with reduced waste packaging and improved food quality.

It is also an object of the present invention to provide a container for storing and heating matter other than food.

It is also an object of the present invention to provide a container allowing ready access to the contents thereof.

The present invention provides a container as recited in the appended independent claim 1.

Further features of the present invention are provided as recited in any of the appended dependent claims.

Described hereinafter is a method of storing and heating matter comprising the steps of storing matter in a container; keeping matter cool inside the container with ice; heating said ice so as to generate steam; and exposing the matter to the steam so that the matter is heated. Ideally, the ice is heated by means of an induction heating device. The said matter may be food.

In the said described method, prior to storing matter, a mixture of ice and water may be flowed into the reservoir. Ideally, the mixture of ice and water is frozen after is has been flowed into the reservoir. Said ice may be formed from sterile water.

Embodiments of the present invention will now be described with reference to the accompanying drawings, in which;
Figure 1 is a perspective view of a first embodiment of the present invention arranged in a closed configuration;
Figure 2 is a perspective view of the first embodiment arranged in an open configuration;
Figure 3 is an exploded perspective view of a tray, dish and dish lid subassembly of the first embodiment;
Figure 4 is a perspective upward view showing the underside of a tray of the first embodiment engaging with a shelf of said first embodiment;
Figure 5 is a perspective view of a stabilizer of the first embodiment;
Figure 6 is a schematic cross-sectional side view of the first embodiment;
Figure 7 is a perspective view of a second embodiment of the present invention;
Figure 8 is a perspective front view of a container of the second embodiment of the present invention arranged with a lid thereof located in an open position;
Figure 9 is a perspective rear view of the container of the second embodiment arranged with the lid thereof located in a closed position and with a handle thereof located in an upright use position;
Figure 10 is an exploded perspective view of the container of the second embodiment;
Figure 11 is a perspective front view of the container of the second embodiment with a lower tray thereof rotated so as to open a compartment of the tray;
Figure 12 is an upward perspective view of the underside of the container of the second embodiment arranged in the configuration shown in Figure 11;
Figure 13 is a perspective top view of an lower dish of the container of the second embodiment;
Figure 14 is a side view of the lower dish shown in Figure 12;
Figure 15 is a perspective front view of the container of a third embodiment of the present invention;
Figure 16 is a perspective view of a lower dish and associated upper dish receiving connecting cup;
Figure 17 is a top plan view of the lower dish shown in Figure 16 partially clipped into the associated upper dish receiving cup;
Figure 18 is a perspective view of the dish of Figure 16 fully clipped into the associated cup with an upper dish partially located within said cup;
Figure 19 is a cross-sectional side view of the lower dish fully clipped into the cup and the upper dish fully located within said cup; and
Figure 20 is a perspective view of the container of a fourth embodiment of the present invention.

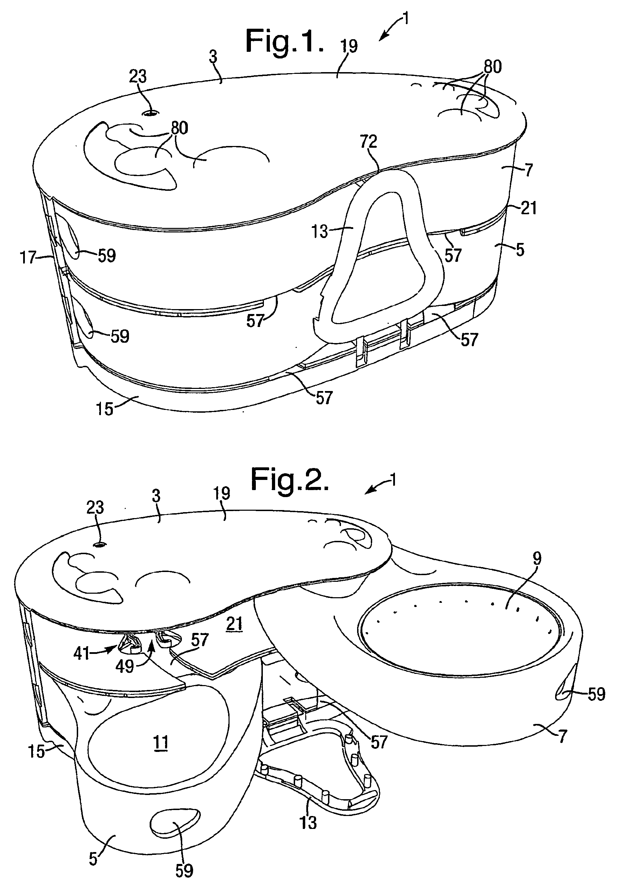

A first embodiment of the present invention is shown in Figures 1 to 5 of the accompanying drawings as a container 1 for receiving and storing food and in which said food may be steam heated. The container 1 is intended for particular use in the storage, cooking/heating and serving of in flight meals on commercial passenger aircraft.

The container 1 comprises a body 3 in which two identical trays (or draws) 5, 7 are located one above the other. Each tray 5, 7 may be selectively rotated relative to the body 3 about one of two pivots located at opposite ends of the body 3. The operation of these pivots will be described in greater detail below.

Through use of the pivots, each tray 5, 7 may be rotated independently of the other so as to allow access to one of two compartments 9, 11 formed in each tray (see Figure 2). With reference to the following description, it will be understood that the particular pivot mechanism selected to allow rotation of a tray 5, 7 determines which compartment 9, 11 is presented to the user for access.

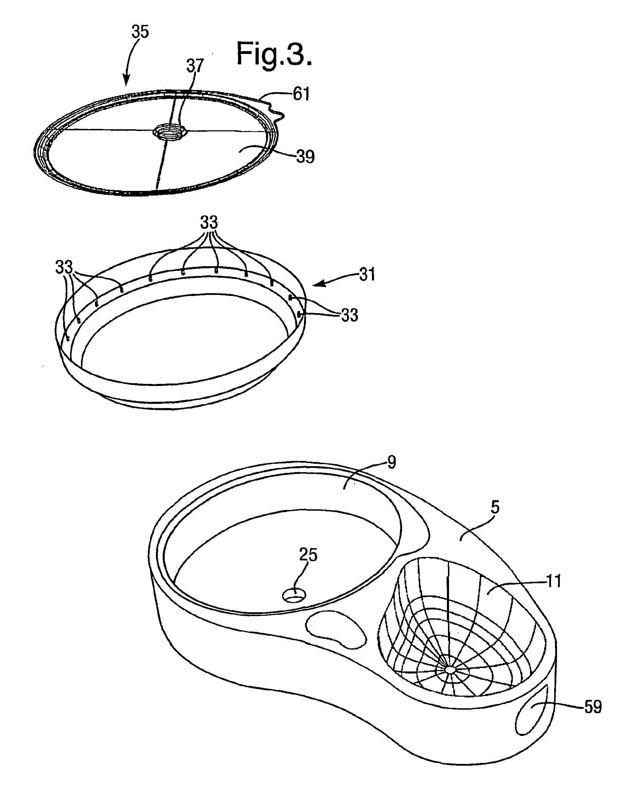

Once a tray 5, 7 has been rotated from the body, the rotated tray may be pulled from its remaining pivot support and entirely removed from the body 3 (see Figure 3). In the embodiment shown in the accompanying drawings, the tray 5, 7 must be rotated from the body 3 before it is possible for the tray to be entirely removed from the body 3. This reduces the risk of a tray 5, 7 becoming unintentionally detached from the body 3. However, the arrangement may be readily modified so as to allow a tray to be pulled directly from the closed configuration of Figure 1 without the tray first being rotated.

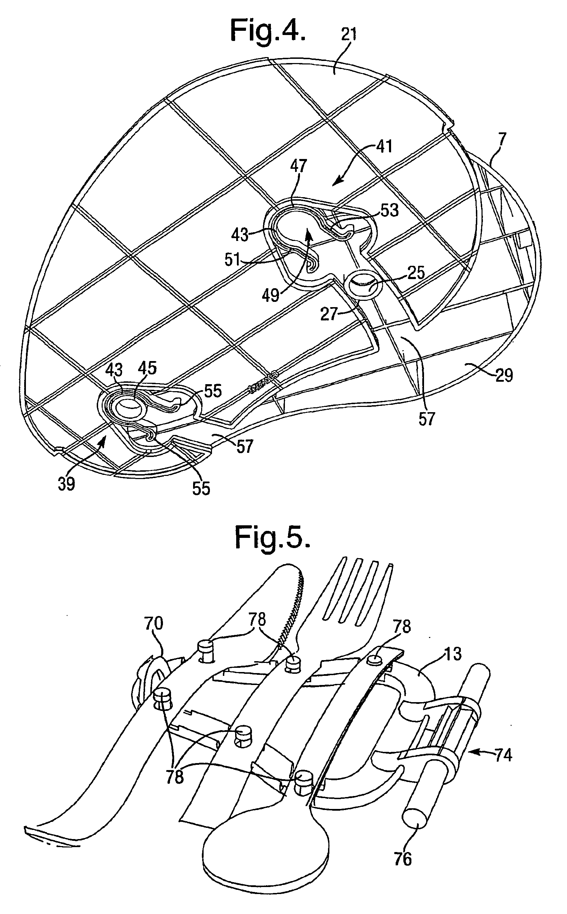

An accidental detachment of a tray 5, 7 from the body 3 is also prevented by use of a stabilizer 13 which must be moved from a storage configuration (see Figure 1) to a use configuration (see Figure 2) before either of the two trays 5, 7 may be moved relative to the body 3. An enlarged view of the stabilizer 13 is shown in Figure 5 of the accompanying drawings. The stabilizer 13 is described in greater detail below.

The container 1 has a generally kidney-shaped plan form, however it will be understood that containers of other shapes may be provided in accordance with the present invention. The body 3 of the container 1 comprises a base portion 15, a rear wall 17, a top portion 19, and a central shelf portion 21. The top portion 19 and central shelf portion 21 are rigidly mounted to the rear wall 17 which extends upwardly from a rear perimeter edge of the base 15. The central shelf portion 21 is spaced equidistant from the base 15 and top portion 19. The distance between the central shelf portion 21 and the base 15 or top portion 19 is approximately equal to the depth of each tray 5, 7 so that a tray 5, 7 may be received by the body 3 either side of (i.e. above and below) the central shelf portion 21. The geometry is such that one of the two trays 5, 7 may be received between the central shelf portion 21 and the base 15, and the other of the two trays 5, 7 may be received between the central shelf portion 21 and the top portion 19, without there being a significant spacing between these elements which would allow an undesirable ingress of foreign matter or allow an undesirable twisting, rattling or other undesirable movement of the trays within the body 3.

The base 15 comprises a hollow section for receiving 250 ml of water. It will be understood that a base may be provided for receiving alternative volumes of water in accordance with the present invention. In use, the water held in the reservoir may be frozen so as to assist in keeping cool food held in the compartments 9, 11 of each tray 5, 7. This assists in preserving the food. The reservoir in the base 15 may be divided so that separate bodies of water are located below each compartment 9, 11 of the trays 5, 7. It may then be desired to freeze one or more bodies of water with one or more bodies of water remaining unfrozen. The implementation of this option may, for example, depend on the type of food being held within the compartments 9, 11 of the trays 5, 7.

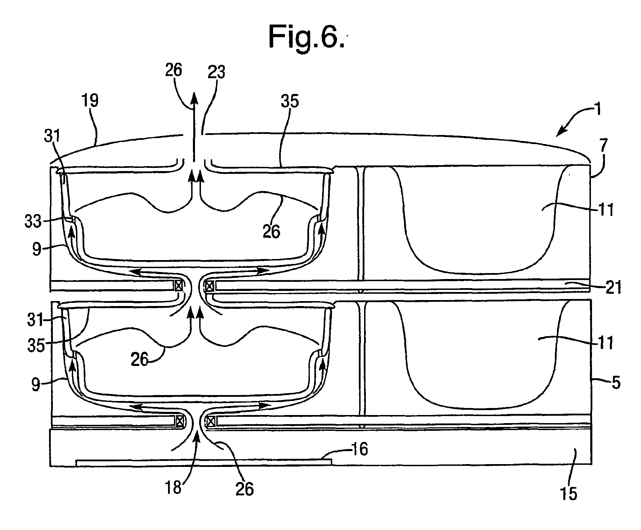

The base 15 further comprises an element 16 (see Figure 6) located in or adjacent the reservoir which is adapted for heating by an induction cooker. In order to be used with a conventional induction cooker, the element is of a ferrous material. The element may alternatively be of aluminium for use with very high frequency induction heating devices. Those skilled in the art will understand that, when used in conjunction with an induction cooker, the element is exposed to an electromagnetic field which induces an electric current in the element. The element is thereby heated and, in turn, heats the region in its immediate vicinity (for example, the reservoir). Ideally, the element is located below the reservoir so that the heat generated rises into the water and/or ice held in the base 15. This maximises the efficiency with which steam may be generated from the water/ice. Furthermore, the element may be located so as to extend below both compartments 9, 11 of the trays 5, 7 or, alternatively, may be located under just one of the compartments 9, 11 of the trays 5, 7 so as to assist in reducing any convection and conduction heating of the other of the compartments 9, 11. This latter option may be preferred in circumstances where it is known that certain compartments will only ever contain food which should not be heated (for example, fruit). Furthermore, insulating materials may also be used in order to improve the heating or cooking of food in individual compartments 9, 11 and so as to thermally isolate selected compartments 9, 11 which are to remain cool.

The reservoir provided in the base 15 comprises a steam outlet port 18 (see Figure 6) which may also serve as an inlet port for allowing the reservoir to be filled with water. When the container 1 is arranged in the closed configuration as shown in Figure 1, the steam outlet port is located in fluid communication with a vertical ducting arrangement which allows steam to be channelled from the reservoir vertically upwards into a first compartment 9 of the lower tray 5 and then upwardly into a further compartment 9 of the upper tray 7 before upwardly exiting the container 1 by means of a steam vent 23 in the top portion 19.

The vertical ducting system comprises a channel 25 extending through a circular boss 27 projecting downwardly from the underside 29 of each tray 5, 7. This boss 27 of the upper tray 7 is clearly shown in Figure 4. The channel 25 allows for fluid communication between the underside 29 of a tray 5, 7 and the interior of the compartment 9 which is to be heated during use of the container 1 (see Figure 3). A dish 31 is removably held within said compartment 9 of each tray 5, 7 for receiving food. The dish 31 is provided with a plurality of apertures 33 spaced equi-distant about an upper perimeter edge thereof.

During use of the container 1, steam (represented by flow arrows 26 in Figure 6) is able to pass upwardly through the channel 25 into a cavity between the dish 31 and the compartment 9, and then through the apertures 33 into the region of the dish 31 which receives food. It will be understood that the cavity between the dish 31 and the compartment 9 may be provided by numerous means for ensuring a spacing of the dish 31 from the compartment 9. For example, the dish 31 may be suspended from an upper perimeter edge thereof which locates on a seat provided in the compartment 9. It will also be understood that the equi-distant arrangement of the apertures 33 along the perimeter of the dish 31 assists in ensuring an even heating/cooking of food held by the dish 31. In order to avoid the apertures 33 from becoming blocked with food, it is preferable for the apertures 33 to be located above the food in an upper region of the dish 31.

In addition to the apertures 33 or as an alternative thereto, one or more steam inlets may be provided at the base of the dish 31 so as to ensure steam is released directly into the food. In order to prevent food and associated liquids from blocking the or each inlet in the dish base, the or each inlet may be provided with a one-way valve allowing steam into the dish but preventing food and liquid from passing therethrough in the opposite direction.

The dish 31 is further provided with a lid 35 (see Figure 3). The dish lid 35 may optionally have an underside shaped so as to direct steam exiting the apertures 33 downwardly onto food within the dish 31. The lid 35 also comprises an aperture 37 for allowing steam to pass from the dish 31 into the channel 25 of a tray 7 located thereabove or into the steam vent 23 in the top portion 19 of the container body 3. The aperture 37 is positioned within the lid 35 so as to align directly below the channel 25 or steam vent 23 (as the case may be) when the container 1 is arranged in the closed configuration (which is the configuration in which the container is placed when food held therein is being heated/cooked).

In order to maximise the efficiency of the heating/cooking process, the system for conveying steam through the container 1 is arranged so as to minimise steam leakage between components of container 1. This may be achieved by ensuring appropriate sealing between components. For example, the arrangement of the container 1 is such that the opening of the channel 25 provided by a boss 27 locates about the steam outlet port 18 in the base 15 (see Figure 6) and in abutment with the base 15 (in the case of the lower tray 5) and about the lid aperture 37 and in abutment with the upper surface 39 of the lid 35 (in the case of the upper tray 7). Similarly, the lid 35 of each dish 31 is sized and shaped so as to form an effective seal with the dish 31 such that steam entering through the apertures 33 in the dish 31 can only leave through the aperture 37 rather than at the interface between the lid 35 and the dish 31. Furthermore, the aperture in the lid 35 of the uppermost dish 31 is arranged so as to seal about the steam vent 23. One or both of a pair of mating components may be manufactured with a rubberised material (or coating) and/or provided with a separate seal element so as to minimize steam leakage.

In the open configuration of Figure 2, it will be seen that the upper tray 7 has been rotated about a right-hand pivot mechanism 39. This rotation of the upper tray 7 is also shown from a bottom-rear viewpoint in Figure 4. The right-hand pivot mechanism 39 is identical to the left-hand mechanism 41. Both pivot mechanisms 39, 41 associated with the upper tray 7 are identical to the right-hand and left-hand pivot mechanisms (not directly shown in the drawings) associated with the lower tray 5. These pivot mechanisms perform a dual function of allowing a tray to be selectively rotated or unclipped from the container body 3. With reference to Figure 2 in particular, it will be understood that when a tray 5, 7 is detached from the body 3 at the left-hand pivot mechanism 41, the tray is rotated about the right-hand pivot mechanism 39. In the alternative, when a tray 5, 7 is detached from the body 3 at the right-hand pivot mechanism 39, the tray is rotated about the left-hand pivot mechanism 41 (as in the case of the lower tray 5 shown in Figure 2). The pivot mechanisms 39, 41 are described in greater detail below.

Each of the pivot mechanisms 39, 41 comprises an Omega-shaped clip member 43 which is secured to the body 3 and into which one of two bosses 27, 45 on the underside 29 of a tray 5, 7 snap-fits. The clip member 43 comprises a part circular (or "C" Shaped) portion 47 shaped and sized so as to receive a boss 27, 45 of a tray 5, 7 and so as to extend more than halfway along the circumference of said boss 27, 45 in order to retain said boss 27, 45 within the part circular portion 47. Nevertheless, the clip member 43 is manufactured from a resiliently deformable material which allows a boss to be pulled from the part circular portion 47 through a gap 49 between ends 51, 53 of the part circular portion 47.

The part circular portion of the clip member 43 is attached to the body 3 of the container 1 so that one or more of the ends 51, 53 is free to be displaced laterally by a camming action of the boss 27, 45 as said boss passes through the gap 49. It will be understood that, in order for a boss 27, 45 to be clipped into the part circular portion 47 through the gap 49, the ends 51, 53 must be moved outwardly. In order for this outward movement to be achieved by means of a camming action, a camming arm having an outwardly curving portion 55 is provided extending from each end 51, 53 for abutment with the boss 27, 45. As a tray 5, 7 is pushed towards a closed position, a boss 27, 45 abuts the curved portions 55 and thereby presses apart the ends 51, 53. Once the boss 27, 45 is moved into the part circular portion 47, the ends 51, 53 are able to move back towards their original position. In so doing, the part circular portion closes around the boss 27, 45 due to an inherent elasticity in the material of the clip member 43. The boss 27, 45 is, in this way, held by the container body 3, but not so tightly as to prevent a rotation of the boss 27, 45 within the part circular portion 47 in the event that the other of the pivot mechanisms 39, 41 is used to detach the tray 5, 7 from the container body 3.

Each clip member 43 is manufactured as a separate component and secured to the shelf portion 21 or base 15 by means of adhesive. It will be understood however that other suitable fixing means may be used (for example, welding). Alternatively, each clip member may be formed integrally with the shelf portion or base (i.e. in the same moulding). Each clip member 43 is recessed into the shelf portion 21 or base 15. This allows the upper surface of the base 15 or shelf portion 21 to locate in abutment with or in close proximity to the underside 29 of the adjacent tray 5, 7. Each boss 27, 45 projects downwardly from the underside 29 of the tray 5, 7 and is thereby able to locate in a recessed clip member 43. The recess in which a clip member 43 is located is sized and shaped so as to provide sufficient room for the outward movement of the ends 51, 53 and curved arms 55.

Furthermore, a recess channel 57 extends from each of the clip receiving recesses to a front edge of the base 15 or shelf portion 21 (see Figures 1 and 4). Each channel 57 is shaped and sized so that a boss 27, 45 may pass therealong and thereby gain access to the clip member 43. In the container 1 shown in the accompanying drawings, the channel 57 associated with a particular pivot mechanism of any one tray 5, 7 follows a part circular path and has a centre of curvature coincident with the pivot axis of the other of the pivot mechanisms 39, 41 of that tray. Furthermore, the width of the channel 57 is approximately the same as the outer diameter of the boss 27, 45 which it receives in use. This arrangement ensures an accurate guiding of a tray 5, 7 between open and closed positions whilst minimizing undesirable twisting or lateral movements. It will also be understood that the two channels 57 engaged by a particular tray 5, 7 prevents the tray 5, 7 from being pulled linearly from the body 3 (i.e. with the tray 5, 7 becoming simultaneously detached from both right-hand and left-hand pivot mechanisms 39, 41). In the arrangement shown in the accompanying drawings, it will be understood that a tray 5, 7 can only be removed from the container body 3 by first detaching one of the bosses 27, 45 from its associated clip member 43 and rotating the tray so that the boss is removed from the channel 57 before then detaching the tray from the second pivot mechanism.

With regard to the central shelf portion 21 shown in the accompanying drawings, both the recesses for the clip members 43 and the recessed channels 57 are provided as grooves extending through the entire thickness of the shelf material.

With reference to Figure 4 in particular, it will be understood that the boss 27 associated with the left-hand pivot mechanism 41 not only performs both a pivoting and clipping function but also provides a steam channel 25. The boss 45 associated with the right-hand pivot mechanism 39 will be understood to also perform both a pivoting and clipping function, but in the particular embodiment shown does not also provide a steam channel. Modification may however be made so that the compartment 11 is serviced with steam by providing a conduit through the boss 45. Indeed, each compartment 9, 11 of the container 1 may be provided with a valve which may be open or closed as required in order to supply steam to particular compartments. A route to the steam vent 23 should nevertheless be provided to ensure a safe release of steam regardless of whether valves are opened or closed.

Furthermore, in order to assist in the opening and closing of the trays 5, 7, recesses 59 for receiving the fingertips of a user are provided in the sides of the trays 5, 7. An extension 61 to the perimeter of a dish lid 35 is also provided so as to allow ready removal of the lid 35 once the tray 5, 7 has been opened.

The stabilizer 13 mentioned above is pivotally connected to the base 15 of the container 1 so as to be moveable from a vertical storage position as shown in Figure 1 to a horizontal stabilizing position as shown in Figure 2. In the storage position of Figure 1, a clip portion 70 (see Figure 5) of the stabilizer 13 snap fits under a lip portion 72 of the top portion 19. The stabilizer is thereby retained in the vertical position. When located in this vertical storage position, the stabilizer 13 assists in preventing movement of the trays 5, 7 from their closed positions. It will be understood that the trays 5, 7 are also retained in the closed positions by means of the clip members 43 as described above.

The pivotal connection of the stabilizer 13 to the base 15 comprises a ratchet mechanism which includes a plurality of teeth 74 provided on a hinge pin 76 of the stabilizer 13. The teeth 74 are engaged by an element (not shown) provided on the base 15. The ratchet mechanism is such that movement from the storage position to the stabilizing position is permitted whilst movement in the reversed direction from the stabilizing position to the storage position is resisted (by virtue of the engagement of said element with the teeth 74). However, the connection of the stabilizer 13 to the base 15 is such that the stabilizer 13 may be pulled laterally away from the base 15 against a spring bias so as to disengage said element of the base 15 from the ratchet teeth 74 and thereby allow the stabilizer 13 to be returned to the storage position. Nevertheless, when the stabilizer 13 is ordinarily in the stabilizing position as shown in Figure 2, a spring bias mechanism ensures that the ratchet mechanism is in operation and the container 1 is thereby prevented from toppling forward, particularly when downward pressure is applied to an open upper tray 7 (for example, during use, when cutting food located in the dish of compartment 9).

The stabilizer 13 further comprises a plurality of hook elements 78 for receiving cutlery (for example, a knife, fork and spoon) adjacent the stabilizer 13. When the stabilizer is in the storage position, the cutlery secured to the stabilizer 13 by means of the hook elements 78 is located between the stabilizer 13 and the remainder of the container 1. The cutlery is shown in Figure 5 located on the hook elements 78 of the stabilizer 13, but is not shown in the remainder of the drawings for the sake of simplicity and clarity.

Windows 80 may be provided in the top portion 19 of the container 1 so as to allow the contents of the container 1 to be viewed without moving the container 1 into an open configuration.

In use of the container 1, food is located in the compartments 9, 11 of the trays, 5, 7 and is kept cool for storage purposes by means of ice located in the reservoir of the base 15. The stored food may be fresh ingredients or may have been previously cooked. The food may then be heated or cooked by placing the container 1 adjacent an induction cooker so that the heating element is heated. The ice in the reservoir is thereby melted and steam is generated. The consequential increase in pressure within the container 1 induces a flow of steam from the reservoir through the channels 25, perforations 33, lid outlet 37 and ultimately through the container vent 23. In this way, food located in the container and exposed to the steam is cooked. Food located in compartments not exposed to the steam will remain cool.

Once the food has been cooked, the container 1 may be presented to the end user who may rotate the stabilizer 13 downwardly so as to locate the stabilizer flush with a table or other horizontal surface. Access is thereby gained to the cutlery. The trays 5, 7 may then be selectively rotated about one of their two pivotal connections so as to gain access to the food held within the container 1. Alternatively, the trays 5, 7 may be removed entirely from the container 1. Once the food has been eaten, the trays may be pushed back into the closed position and the stabilizer 13 may be returned to the storage position. The stabilizer 13 is of a resiliently deformable material which allows it to be flexed. This assists in the snap fitting to and release from the lid portion 19 of the stabilizer 13. It will also be understood that the trays 5, 7 are identical and therefore interchangeable which facilitates a ready reassemble of the container 1 by the end user.

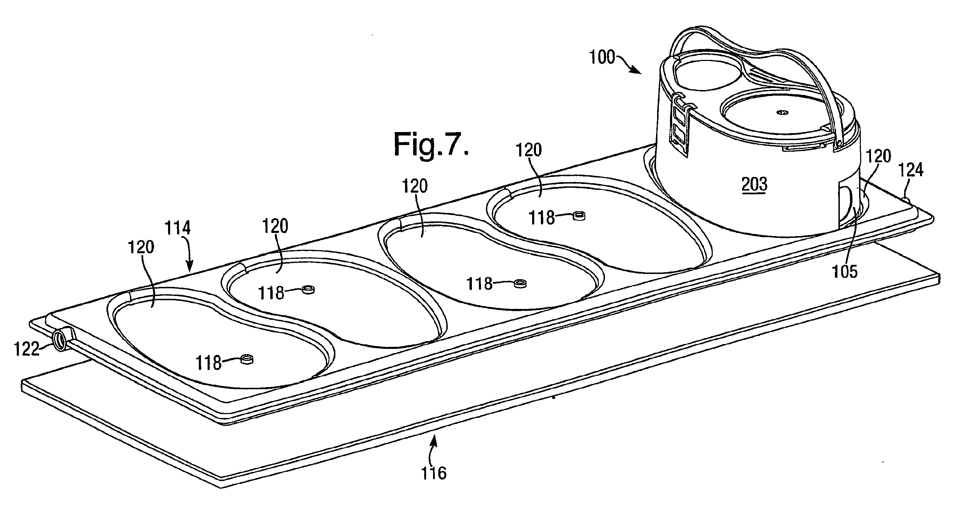

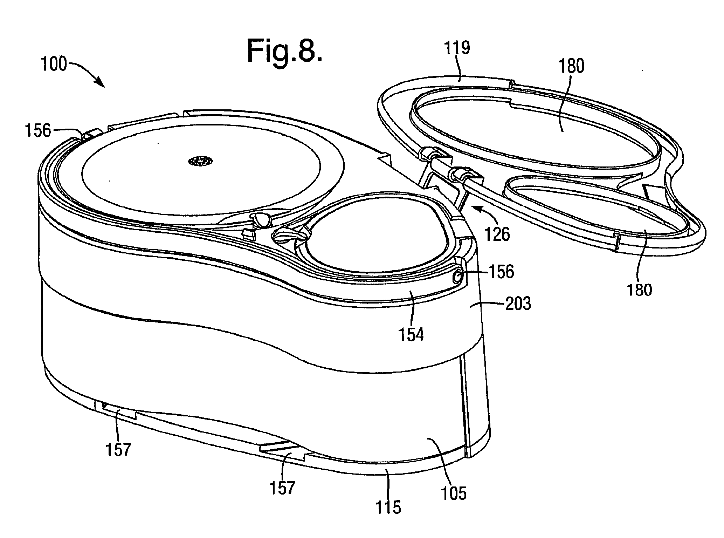

A second embodiment of the present invention is shown in Figure 7 with the container 100 thereof being further shown in Figures 8 to 12.

The second embodiment is similar to the first embodiment in as much as a kidney-shaped container 100 is provided which incorporates four separate compartments for receiving food to be stored and subsequently steam heated/cooked. As in the first embodiment, two lower compartments 109, 111 of the container 100 of the second embodiment are provided in a lower tray 105 which may be rotated from the container body 203 about a selected one of two tray ends. This rotation is allowed by pivot mechanisms 139, 141 located at either end of the lower tray 105. As will be evident from the accompanying drawings, the pivot mechanisms 139, 141 of the second embodiment are identical to the pivot mechanisms 39, 41 of the first embodiment. As such, the pivot mechanisms 139, 141 comprise an Omega-shaped clip member 143 secured to the body 203.

The second embodiment nevertheless differs from the first embodiment in a number of respects as will be discussed in greater detail below. The modifications made to the first embodiment in developing the second embodiment are primarily intended to improve the usability of the system.

Firstly, the second embodiment is provided with a reservoir 114 and a heating element 116 which are each separate to one another and separate to the container 100. It will be understood that, in a modified arrangement, the reservoir 114 and heating element 116 may be provided as a unitary component separate from the container 100. The reservoir 114 of the second embodiment has a generally planar rectangular shape of a width substantially equal to the length of the container 100 and with a length substantially equal to the width of five containers 100. The geometry is such that five containers 100 may be placed on top of the reservoir 114 and located in fluid communication with the interior thereof. The fluid communication between a container 100 and the interior of the reservoir 114 is permitted by means of a valved port 118 provided in the reservoir 114. The port 118 is valved so that, when a container 100 is not connected to a port 118, fluid (i.e. steam and/or water) is prevented from escaping from the interior of the reservoir 114 via the port 118. Also, the valve arrangement of each port 118 ensures that an undesirable ingress of foreign material into the reservoir via a port 118 is prevented. The detail of the valving arranged for each port 118 is not shown in the diagrams, however a suitable arrangement will be apparent to readers skilled in the art. The arrangement is such that a port 118 is opened in response to the docking of a container 100 with the reservoir 114 (i.e. in response to a connection of a container 100 with a port 118).

In order to assist with a correct positioning of a container 100 on the reservoir 114, and thereby ensuring a correct connection of a valved port 118 with the container 100, the upper surface of the reservoir 114 is provided with a recess 120 in the shape of a footprint of the container 100. The valved port 118 is suitably positioned within the recess 120 so as to appropriately connect with a container 100 when the container 100 is lowered into the recess 120.

With reference to Figure 7, it will be seen that the reservoir 114 is provided with five recesses 120, with each recess 120 being provided with a valved port 118. Only one container 100 is shown docked with the reservoir 114.

The reservoir 114 is also provided with an inlet port 122 and an outlet port 124 for allowing the interior of the reservoir 114 to be flushed through with water and refilled with water prior to use. The inlet and outlet ports 122, 124 may be sealed in a conventional manner (for example, by means of a valve or a screw cap).

In the second embodiment as shown in Figure 7, the container 100 is adapted for heating/cooking food which is located in the two larger compartments 109 on the left hand side of the container 100. The valved ports 118 of the reservoir 114 are positioned so as to locate under these larger compartments 109 and thereby conveniently provide steam to the compartments 109. However, if it is intended to also heat/cook food located in the smaller compartments 111, then a reservoir may be provided with additional valved ports located under the smaller compartments 111 so as to conveniently provide steam to these compartments 111. Of course, a skilled person will understand that further valving and ducting arrangements are possible and within the scope of the present invention. For example, a container may be provided with ducting suitable for directing steam from a single reservoir port to any number of the compartments within a container.

In use, it will be appreciated that once food within the container 100 has been steam heated/cooked, the need for the reservoir 114 no longer exists, and by providing a reservoir 114 detachable from the container 100, an inflight meal may be presented in a smaller and lighter container 100 to a passenger. The reservoir 114 may then, potentially, be refilled and immediately reused to steam heat/cook further food (assuming the further food is not already provided with a reservoir for the purposes of cooling and thereby preserving the food).

Furthermore, as will be evident from Figure 7 of the accompanying drawings, the heating element 116 has the same rectangular shape as the reservoir 114 and locates below the reservoir 114 so as to provide a uniform heating thereof. As in the case of the first embodiment, the heating element 116 is adapted for heating with an induction cooker.

In a similar way to the reservoir 114, the provision of a heating element 116 separate to the container 100 allows for a reduction in the size and weight of the container 100 and this allows for a more convenient use by an airline passenger. It will also be understood that the use of a separate heating element 116 avoids the possibility of presenting a passenger with a container having an undesirably hot base which may be uncomfortable or dangerous to the passenger. It will also be understood that the heating element 116 and reservoir 114 may be provided in a single integral unit, however the provision of separate components allows a recently used heating element 116 to be immediately used in association with a different reservoir before said heating element 116 has significantly cooled. This increases the efficiency of the heating/cooking process. The separate reservoir 114 and heating element 116 components may be secured to one another by means of snap-fit connectors (not shown). Snap-fit connection means (not shown) may also be used to secure each container 100 to the reservoir 114.

The container 100 of the second embodiment further differs from the container 1 of the first embodiment in as much as the moveable upper tray 7 of the first container 1 is replaced by an upper tray 207 which is integral with the container body 203. It will be understood therefore that the upper tray 207 of the second container 100 is not moveable relative to the body 203. In order to gain access to the compartments 109, 111 of the upper tray 207, the top portion 119 of the container 100 is rotatable about a double axis hinge 126 relative to the remainder of the container body 203. The top portion 119 will therefore be understood to operate as a lid to the container 100 and be moveable between a closed position as shown in Figures 7, 9 and 11, in which the compartments 109, 111 of the upper tray 207 are closed, and an open position as shown in Figure 8, in which the compartments 109, 111 of the upper tray 207 are open so as to allow access to the contents thereof.

A resilient snap-fit clip 160 is provided on the upper tray 207 for engaging with the lid portion 119 and retaining said lid portion 119 in the closed position relative to the remainder of the container 100.

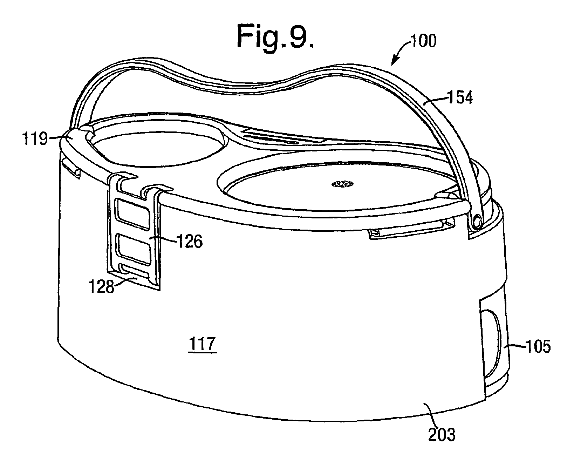

With particular reference to Figure 9, it will be seen that the rear wall 117 of the container body 203 is provided with a recess 128 for receiving the double axis hinge 126 when the top lid portion 119 is arranged in the closed position. The arrangement is such that the double axis hinge 126 locates flush with the outer surface of the rear wall 117.

The top lid portion 119 is provided with two windows 180 which allow the contents of the compartments 109, 111 of the upper tray 207 to be viewed when the top lid portion 119 is located in the closed position. The windows 180 may be simple apertures or may includes glass or a transparent plastics material.

The advantage of providing a rotatable top portion 119 allowing access to the upper tray 207 is that the need for the upper tray 207 to be outwardly moveable is thereby obviated. The upper tray 207 thus remains located directly over the base portion 115 of the container 100 at all times. As a consequence, there is no tendency for the container 100 to rotate or topple forward when a downward pressure is applied to the upper tray 207. It will be appreciated that, during use of the first container 1, there is a tendency for the container to topple forward when downward pressure is applied by a passenger to an extended upper tray 7 (for example, when cutting food contained in the upper tray). Although this tendency is negated in the first container 1 by means of the stabilizer 13, the presence of a toppling moment is nevertheless undesirable. In the container 100 of the second embodiment, no toppling moment is generated when downward pressure is applied to the compartment 109, 111 of the upper tray 207 by a passenger. There is also therefore no requirement for a stabilizer 13.

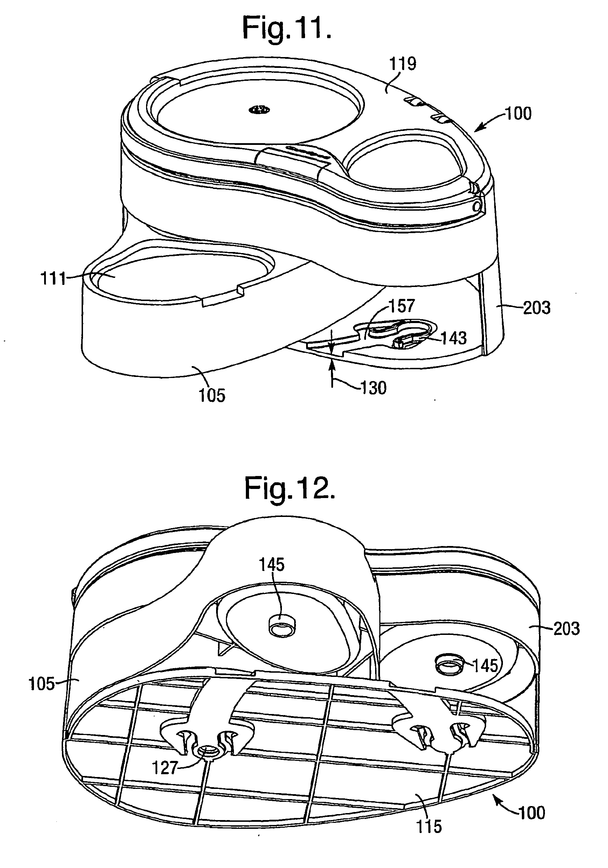

When the lower tray 105 is rotated about one of the pivot mechanisms 109, 141 so as to allow access to one of the compartments 109, 111 in the lower tray 105, it will be understood that downward pressure applied to the extended tray 105 will result in a toppling moment. However, any forward rotation or toppling of the container 100 will be minimal because, as the container 100 rotates forward, the boss 127, 145 located on the underside of the extended compartment 109, 111 will abut the surface (for example, a table) upon which the container 100 is supported. With particular reference to Figure 12 of the accompanying drawings, it will be seen that the smaller compartment 111 of the lower tray 105 is located in an extended position and that the boss 145 associated with the compartment 111 has, accordingly, been unclipped from the Omega-shaped clip member 143 (see Figure 11) and placed in close proximity to the surface on which the container 100 is placed. The spacing between the boss 145 and the surface on which the container 100 is placed is equal to the depth 130 of the base 115 in the recess channel 157. The base 115 of the container 100 is provided with recess channels 157 along which the bosses 127, 145 of the lower tray 105 may travel when the tray 105 is rotated from an Omega-shaped clip member 143. The arrangement of the recess channels 157 is the same as in the first container 1, although it will be appreciated that recess channels are not required for the upper tray 207 since the upper tray 207 remains fixed with the container body 104. Since the free end of each boss 127, 145 locates in abutment with its associated recess channel 157 or in very close proximity thereto, it will be understood that the distance of the free end of each boss 127, 145 is spaced from the surface upon which the container 100 is supported by a distance of approximately the depth 130 of base 115 in the recess channel 157. Since this depth 130 is small, the amount of toppling movement possible by the container 100, with the lower tray 105 extended, is minimal. This is because, as the container 100 rotates forward, the boss 127, 145 which is extended forward of the container body 203 will abut the surface upon which the container 100 is placed. This surface therefore prevents the container 100 from toppling.

Nevertheless, it will be understood that the container 100 may be modified further so as to eliminate entirely any toppling movement. This may be achieved by reducing the base depth 130 to zero and by extending the length of the bosses 127, 145 of the lower tray 105 to locate flush with the lower side of the base 115. In other words, the recess channels 157 in the base 115 are provided as grooves extending through the entire thickness of the base 115. Each boss 127, 145 of the lower tray 105 may then be provided with sufficient length to extend from the lower side of the tray 105 into constant abutment with a surface on which the container 100 is placed. A boss 127, 145 extended forward of the container body 203 will then support the extended compartment 109, 111 and prevent any toppling movement of the container 100. It will also be appreciated that a container 100 modified in this fashion will engage a valved port 118 of the reservoir 114 directly with the boss 127 (associated with the larger compartment 109 of the lower tray 105) rather than with the lower surface of the base 115. Of course, other means for providing fluid communication between a valved port 118 and the boss 127 and for opening a valved port 118 may be provided in accordance with the present invention.

Each compartment 109, 111 of the two trays 105, 207 is provided with a removable dish 132, 134, 136. Each dish 132, 134, 136 is provided with a cupped base portion 138 to which a lid 140 is pivotally connected by means of a hinge 142. The hinge 142 may be formed of a resiliently deformable material which is elastically bent when a lid closure 140 closes a cupped base portion 138. A clip member 144 rotatably mounted to the cupped base portion 138 is rotatable between lid engaged and lid disengaged positions. The elasticity of the hinge material is such that the lid closure 140 of each dish 132, 134, 136 is spring biased into an open position when disengaged from the clip member 144. Each lid 140 is retained in a closed position against the bias of the associated hinge 142 by rotating the clip member 144 over an edge of the lid 140.

It will be seen from the drawings that each compartment 109, 111 of the lower and upper trays 105, 207 is provided with a horizontal base portion 110 from the underside 129 of which the compartment bosses 127, 145 downwardly extend. In use, the dishes 132, 134, 136 received by the compartments 109, 111 may be at least partly supported by the compartment base portions 110. The base portion 110 of the large compartment 109 of each tray 105, 207 is provided with four apertures 108 equi-spaced about the boss 127 which serve to remove material from the base portion 110 and thereby reduce the overall weight of the container 100.

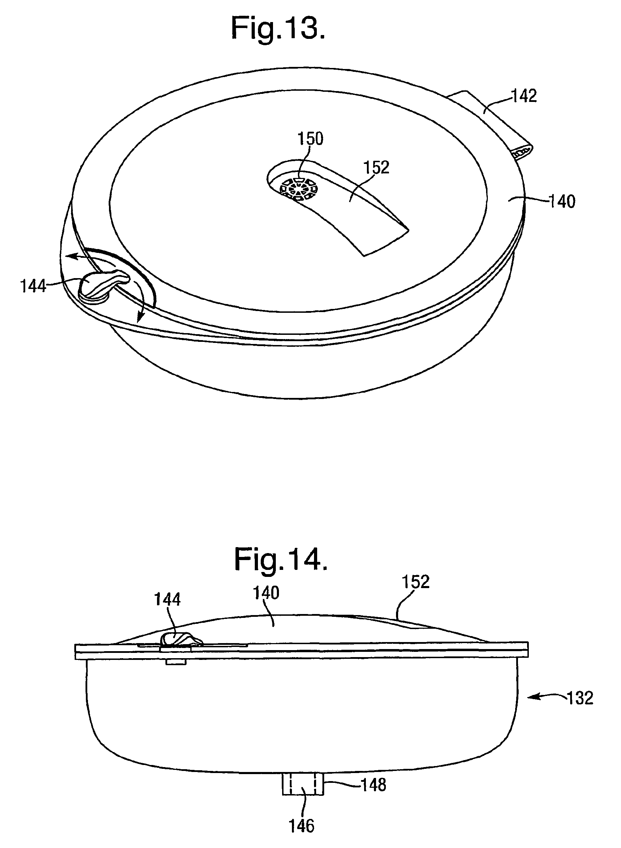

The two dishes 132, 134 for locating in the larger compartments 109 of the lower and upper trays 105, 207 respectively are provided with means for ducting steam therethrough. Specifically, each dish 132, 134 is provided with means for allowing steam to enter and then exit the interior of the cupped base portion 138 where food to be heated/cooked may be located. A steam inlet port 146 is provided centrally in the underside of the cupped base portion 138 of each dish 132, 134. The inlet port 146 is surrounded by a downwardly protecting circular boss 148 (see Figure 14) which assists in correctly positioning the dish 132, 134 in its respective compartment 109 and further assists in sealingly connecting the inlet port 146 (see Figure 14) with the remainder of the steam ducting system (specifically, with the bosses 127 of the lower and upper trays 105, 207). It will be appreciated that the dishes 132, 134 may be provided with a plurality of steam inlet apertures spaced equi-distant about an upper perimeter edge in a similar fashion to the arrangement of apertures 33 in the first container 1. These apertures may be provided in the dishes 132, 134 in addition to or as an alternative to the inlet port 146.

The lid closure 140 of each dish 132, 134 is provided with a centrally located steam outlet port 150. The lid portion 140 of the dish 132 for the lower tray 105 is provided with a recess channel 152 for receiving the boss 127 downwardly extending from the underside of the larger compartment 109 of the upper tray 207. In use, the boss 127 of the upper tray 207 travels along the recess 152 when the lower tray 105 is rotated about the right-hand pivot mechanism 139. When the lower tray 105 is clipped into the left-hand pivot mechanism 141, the steam exit port 150 of the lower large dish 132 locates directly below, and sealingly connects with, the boss 127 of the upper tray 207.

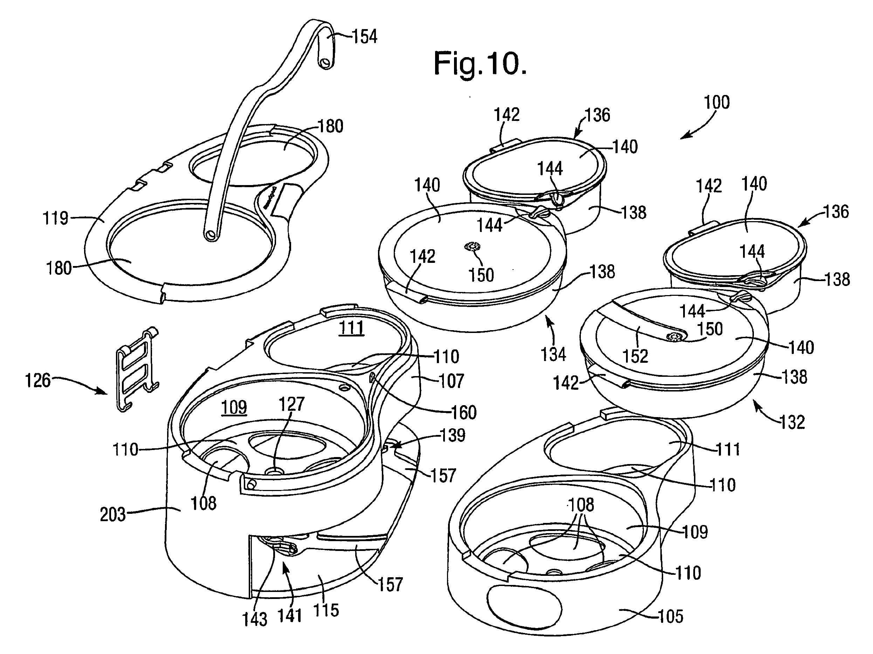

A slightly modified dish 138 is shown in Figure 13 wherein the closure 140 is of a lower profile than shown in Figure 10 such that the recess 152 does not need to extend to the perimeter edge of the lid 140.

A further difference between the second container 100 and the first container 1 is that the second container 100 is provided with a carrying handle for assisting in the carrying of the container 100. The handle 154 is rotatably mounted to the container body 203 so as to be moveable between a storage position, in which the handle 154 is located flush with an upper edge of the upper tray 207 (see Figure 8), and a use position, in which the handle 154 extends vertically upwards in a loop extending from one end of the body 203 to the other (see Figure 9). A resilient clip arrangement (not shown) may be provided at the handle pivots 156 so as to retain the handle 154 in the storage and use positions.

In use of the container 100, food to be steam heated/cooked is loaded into the larger dishes 132, 134 and covered with the closure lid 140. Depending on the type of food to be stored, dishes 132, 134 may be selected having a valve arrangement preventing food and/or associated liquids falling through the steam inlet port 146. It will also be understood that food requiring heating/cooking at higher temperatures or for longer periods of time, are held in the lower tray 105. This is because the lower tray 105 receives steam from the associated reservoir 114 before the upper tray 207. The lower tray 105 will therefore receive steam for a greater period of time and the steam received will tend to be at a higher temperature than that received by the upper tray 207.

Food which does not require heating/cooking is located and stored in the smaller dishes 136. With the four dishes 132, 134, 136 located in their respective compartments 109, 111 of the trays 105, 207, the container 100 may be docked with a reservoir 114 containing cool water, ice or a combination of ice and water (slush). As explained above in relation to container 1, food is kept cool by the adjacent reservoir and thereby preserved. The water/ice in the reservoir is then heated by means of an induction heating device and steam passes under pressure from the reservoir 114 to the container 100 via a valved reservoir port 118. The steam delivered to the container 100 then passes upwardly through first the larger compartment 109 of the lower tray 105 and then through the larger compartment 109 of the upper tray 207. More specifically, it will be understood that steam flowing through the larger compartments 109 does so by flowing through the interior of the larger dishes 132, 134. The steam finally exits the container via the outlet port 150 of the upper large dish 134 and via the neighbouring window aperture 180. If the window aperture 180 is filled with a sheet of glass or transparent sheet of plastics material, then a further port is ideally provided in the container top portion 119 so as to facilitate a ready escape of steam from the container 100.

Once the food has been heated/cooked as required, the container 100 may be lifted from the reservoir 114 by means of the handle 154 and carried to a passenger and presented as an in flight airline meal. The passenger may than gain access to the food within the container 100 by rotating the top portion 119 of the container 100 into an open position (thereby gaining access to the dishes 134, 136 of the upper tray 207) selectively rotating the lower tray 105 in turn about each of the right-hand and left-hand pivot mechanisms 139, 141 (thereby gaining access in turn to the large dish 132 and small dish 136 of the lower tray 105). Once access has been gained to the dishes 132, 134, 136 by a passenger, access to the food itself may clearly be obtained by rotating the clip member 144 of a dish so as to disengage said clip member 144 from the dish lid 140 and allow the dish lid 140 to be rotated to the open position under the spring bias of the lid hinge 142.

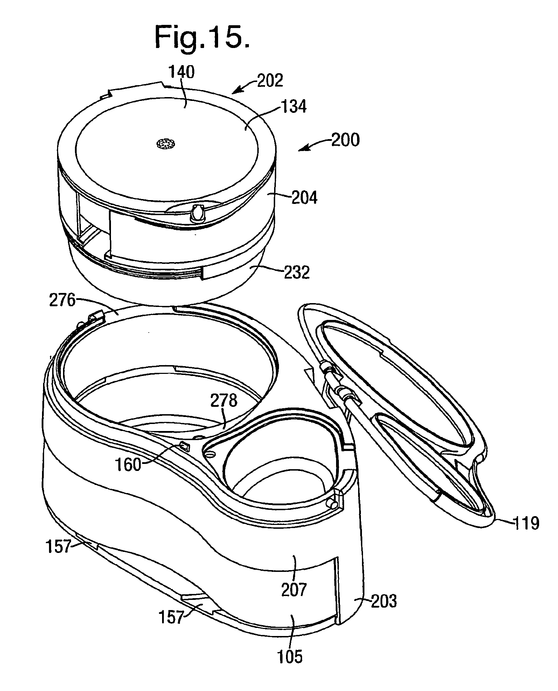

A third container 200 of a third embodiment of the present invention is shown in Figure 15 of the accompanying drawings. The third container 200 is identical in many respects to the second container 100 of the first embodiment and like reference numerals are used herein in respect of like parts.

For the purposes of clarity only, the handle 154 of the third container 200 is not shown in the accompanying drawings. In practice, however, a handle 154 identical to that of the second container 100 would be provided.

The third container 200 differs from the second container 100 only in that the base portion 110 of the large compartment 109 in the upper tray 207 is removed so that a stacked assembly 202 of two interconnected large dishes may be lowered downwardly into the container body 203 so that the lower dish locates in the large compartment 109 of the lower tray 105 and the upper dish locates in the large compartment 109 of the upper tray 207.

This arrangement has benefits when only the large dishes of the large compartments 109 are to receive food requiring heating/cooking and there is limited space available in the induction heating device. In these circumstances, the stacked assembly 202 may be removed from the remainder of the container 200 as a single unit and itself docked with a reservoir 114. It will be appreciated that the stacked assembly 202 is considerably smaller than the third container 200 as a whole and so more meals can be heated/cooked when only stacked assemblies 202 are placed in a cooker.

It will be understood that an entire container 200 may be initially docked with a reservoir 114 so as to assist in preserving the food held within the container 200. When the food within the large compartments 109 is to be heated/cooked, the container 200 may be removed from the reservoir 114, the lid portion of the container 200 opened and, the stacked assembly of large dishes 202 pulled upwardly from the remainder of the container 200 and docked with the reservoir 114 so as to receive steam generated from water/ice within the reservoir 114.

Although the reservoir 114 shown in Figure 7 of the accompanying drawings may be used for docking with the assembly of large dishes 202, it will be appreciated that a different reservoir (not shown) may be provided for specific use with a plurality of dish assemblies 202. As such a reservoir may have a matrix of valve ports 118 arranged in rows and columns across the reservoir so as to maximise the number of dish assemblies 202 docked with the reservoir. The recesses 120 provided in the upper surface of the reservoir will then each have a footprint corresponding with the shape of a dish assembly 202. In this way, a dish assembly 202 will be guided into position and correctly docked with a reservoir valve 118.

The assembly 202 comprises a large upper dish 134 positioned above a large lower dish 232. A connecting cup 204 is located between the upper and lower dishes 134, 232 for connecting the two dishes together. More specifically, the connecting cup 204 cradles the upper dish 134 which is placed therein and grips the lower cup 232 which is suspended therefrom.

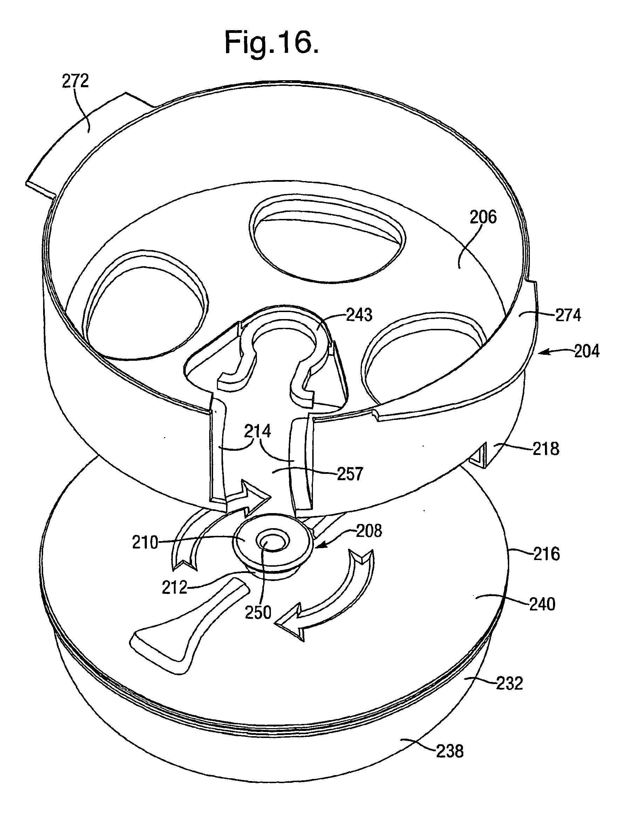

With reference to Figure 16 and the subsequent detailed description of the assembly 202, it will be understood that the connecting cup 204 grips the lower cup 232 in such a way that, when the assembly 202 is dropped/lowered into the container 200 so that the lower dish 232 locates in the large compartment 109 of the lower tray 105, the lower dish 232 is released from the connecting cup 204 when the lower tray 105 is rotated from the container body 203 about the right-hand pivot mechanism 139. This release is facilitated by means of an Omega-shaped clip member 243 in the base 206 of the connecting cup 204 and by means of a recess channel 257 extending through the full thickness of the cup base 206 and extending from the Omega-shaped clip member 243 to the front edge of the cup base 206. The arrangement of the clip member 243 and recess channel 257 is the same as that of the left-hand pivot mechanism in the shelf portion 81 of the first embodiment (see Figure 4). However, with particular reference to Figure 16 of the accompanying drawings, it will be appreciated that, rather than receiving a downwardly projecting compartment boss 27 of an upper tray 7, the Omega-clip member 243 and recess channel 257 of the connecting cup 204 in contrast receive a boss 208 projecting upwardly from the lid 240 of the lower dish 232.

The boss 208 projecting upwardly from the lower dish lid 240 has a mushroom or a T-shaped cross-section with a steam outlet port 250 extending through the centre thereof. In other words, the boss 208 is provided with an annular disc-shaped flange 210 located on the free end of a cylindrical portion 212. The geometries of the boss 208, clip member 243 and recess channel 257 are such that the cylindrical portion 212 of the boss 208 may slide along the recess channel 257 and snap fit into the Omega-shaped clip member 243 (in a similar way to how the boss 27 of the first embodiment travels along the recess channel 57 and clips into the Omega-shaped clip member 43), whilst the flange 210 of the boss 208 locates above and radially beyond the recess channel 257 and Omega-shaped clip member 243 so as to prevent the boss 208 from being removable in a downward direction from the connecting cup 204. It will be understood therefore that the boss 208 effectively hooks about the connecting cup 204 and allows the lower dish 232 to be suspended from the connecting cup 204.

Furthermore, the surfaces 214 of the cup base 206 either side of the recess channel 257 which is abutted by the boss flange 210 is recessed by at least the depth of the boss flange 210 so that the upper surface of the boss flange 210 does not project above the connecting cup base 206. The Omega-shaped clip member 243 is similarly recessed below the upper surface of the connecting cup base 206 so that the boss flange 210 does not project upwardly of the connecting cup base 206 when the boss 208 is clipped therein. As a consequence, the flange 210 does not interfere with an upper dish 134 which is placed in the connecting cup 204.

As well as the lower dish 232 being suspended from the connecting cup 204 by means of the engagement between the boss 208 with the recess channel surfaces 214 and/or clip member 243, the lower dish 232 is also suspended from the connecting cup 204 by means of an engagement between a perimeter rim 216 of the dish 232 and a hooking shoulder 218 extending downwardly from the connecting cup 204. Specifically, the hooking shoulder 218 extends downwardly from a rear perimeter edge of the cup base 206. It will be understood that the hooking shoulder 218 is confined to the rear half of the connecting cup 204 so as to not prevent a forward sliding movement of the lower dish 232 out of the Omega-shaped clip member 243 and along the recess channel 254. The hooking shoulder 218 has a unitary part-annular shape. The hooking shoulder 218 may however be provided as a plurality of hooking shoulders or hooking elements spaced from one another and positioned so as to locate under the rim 216 of the lower dish 232.

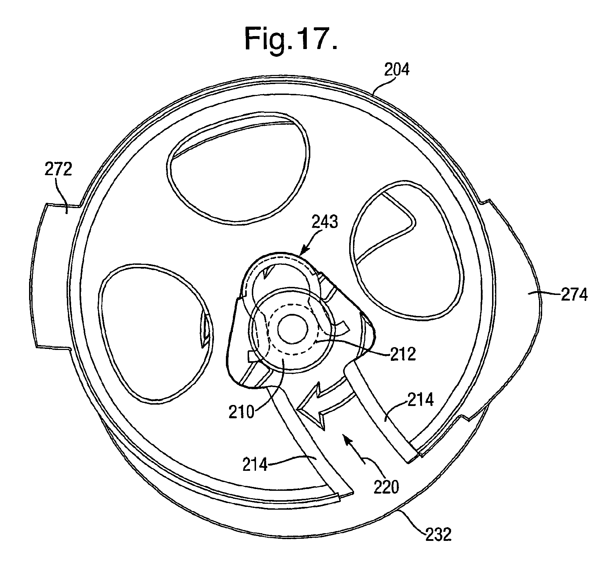

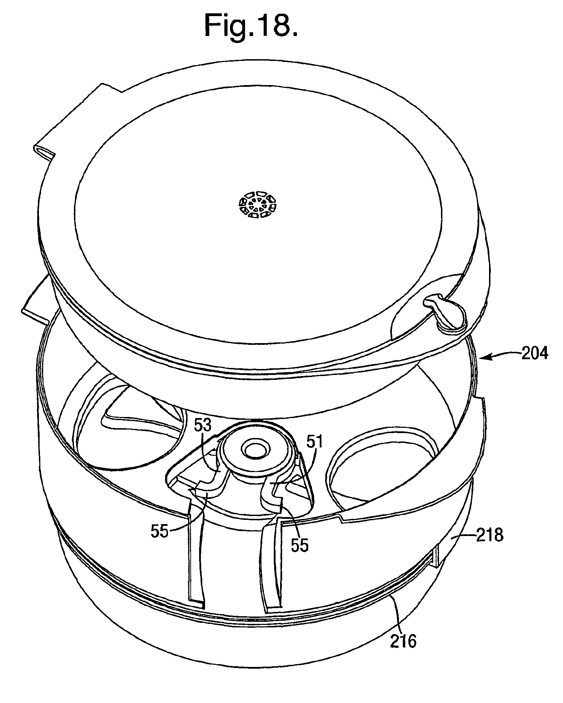

The lower dish 232 is shown in Figure 18 snap-fitted into the connecting cup 204 by means of the Omega-shaped clip member 243. In Figure 17, the cylindrical portion 212 of the boss 208 can be seen outwardly camming the ends 51, 53 of the clip member 243 as the lower dish 232 is moved in the direction of arrow 220 so as to act with the connecting cup 204. In both Figures 17 and 18, it will be seen that the flange 210 of the boss 208 locates above the Omega-shaped clip member 243 and thereby prevents the lower dish 232 from dropping from the connecting cup 204. As mentioned above, and as shown in Figure 18 when the boss 208 is snapped into the clip member 243, the rim 216 of the dish 232 is received by the part-annular hooking shoulder 218 which also then serves to prevent the lower dish 232 from dropping from the connecting cup 204.

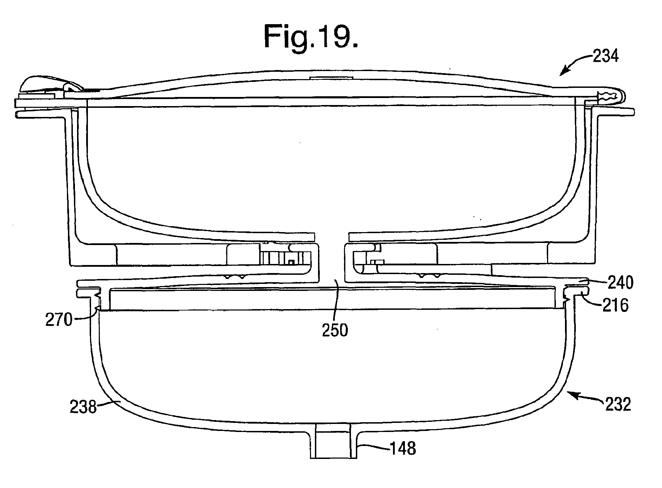

In order to reduce the possibility of the lid 240 of the lower dish 232 from being pulled open due to the suspension of the lower dish 232 from the connecting cup 204 by means of the lid boss 208, the lid 240 is secured to the base portion 238 of the lower dish 232 by virtue of a screw thread connection 270 between the base portion 238 and lid 240 (see Figure 19). The use of a screw thread connection 270 also avoids the need for a hinge between the lid 240 and the base portion 238 and assists in avoiding having components projecting radially from the lower dish 232 which may catch on the body 203 of the container 200.

The upper dish placed inside the connecting cup 204 may be a dish 134 identical to the large upper dish used in the second container 100. Alternatively, as shown in Figure 19, a modified dish 234 may be used which is identical to the large upper dish 134 of the second container 100 but with the downwardly projecting boss 127 removed.

Two tabs 272, 274 extend radially outwardly from diametrically opposite upper perimeter edge portions of the connecting cup 204 for the purposes of resting on top of recessed surfaces 276, 278 in the upper tray 207 (see Figure 15). It will be understood that the connecting cup 204 is suspended within the body 203 of the container 200 by the abutment of the tabs 272, 274 on the recessed surfaces 272, 278 of the upper tray 207. With the connecting cup 204 so suspended, a lower dish 232 snap-fitted into the connecting cup 204 will be positioned within the large compartment 209 of the lower tray 105 and may be unclipped from the connecting cup 204 and presented to a passenger by rotating the lower tray 105 outwardly from the container 203 about the right-hand pivot mechanism 139. A passenger may then gain access the heated/cooked food within the large lower dish 232 by unscrewing the lid 240. A passenger may gain access to the contents of the upper dish 134 by opening the container lid 119 and then opening the dish lid 140 as described above in relation to the second embodiment.

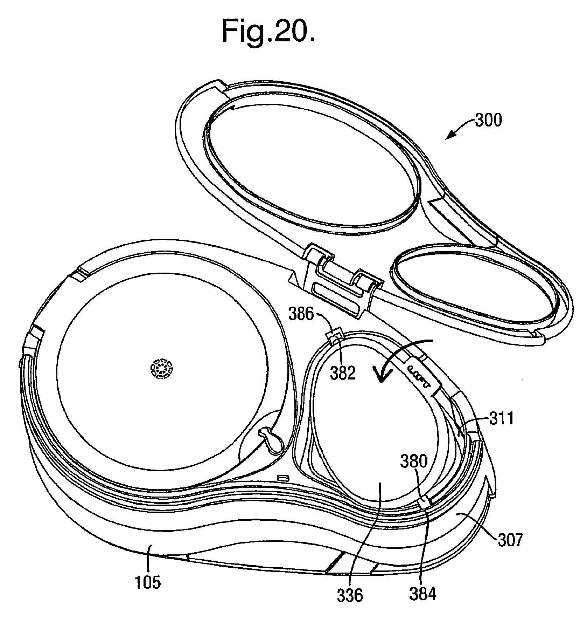

Either one of the second and third containers may be modified so as to provide means for tipping food held in the upper tray onto food held below in the lower tray. Such a system is of particular use in serving a meal having a high fluid content. It will be understood that the fluid (for example, the milk of a breakfast cereal dish or the sauce of a pasta dish) may be held in the upper tray and conveniently tipped at the time of serving, onto the solid food below stored in the lower tray. In Figure 20, the container 300 of a fourth embodiment of the present invention is shown. The fourth container 300 is identical to the third container 200 accept that the small compartment 311 in the upper tray 307 and the small dish 336 locatable in the small compartment 311 of the upper tray 307 are adapted to allow the small dish 336 to rotate through at least 90° within the compartment 311 and thereby allow food held within the dish to be tipped or poured onto food held in the lower tray 105. In order to allow the dish 336 to rotate, two pivot pins 380, 382 extend outwardly from adjacent an upper perimeter edge of the dish 336. The pins 380, 382 are axially aligned with each other. The pins 380, 382 are also aligned with the major longitudinal axis of the dish 336. Recesses 384, 386 in the upper tray 307 receive the pins 380, 382. It will be understood that the pins 380, 382 rotate within the recesses 384, 386 when the dish 336 is rotated. It will also be understood that the base 110 of the small compartment 311 in the upper tray 307 is removed so as to allow food tipped from the upper dish 336 to fall downwardly into the lower tray 305.

In other respects, the fourth container 300 is identical to the third container and the operation and use of the fourth container 300 is identical to that of the third container 200 (other than, of course, with respect to the tilting of the small upper dish 336).

The present invention is not limited to the specific embodiments described above. Alternative arrangements and suitable materials will be apparent to a reader skilled in the art. For example, the container 1 may be provided with coloured sections (such as the trays 5, 7) to provide a colour coding for ready identification of contents and sell by dates, for example. Thermochromic dye may be used to indicate the cooking status of food within the container 1. Also, radio frequency identity (RFID) chips may be implanted in the container 1 so as to allow the container 1 to communicate electronically with an induction heating device such as an induction cooker/oven or an induction airline trolley. This facility assists in ensuring food is heated/cooked for the correct amount of time and also allows a logging of information such as food temperature data.

Further alternative arrangements may relate to the ducting means for allowing steam generated in the reservoir to flow into the container compartments and/or dishes. For example, the flow of steam into a dish may be controlled (e.g. prevented or restricted)
by means of a valve located in the steam inlet port 146 in the cupped base portion 138 of the dish (see Figure 14). In addition, or alternatively, the valve in the steam inlet port 146 may be a one-way valve which prevents matter falling through the port 146 from the interior of the dish. Furthermore, the valved ports 118 of a reservoir may be individually and selectively rendered inoperable so that a user may determine which ports of the reservoir are capable of passing steam. A valved port may thereby be rendered incapable of passing steam regardless of whether or not a container is docked with the port.

A reservoir may also be provided in a modular form so that separate reservoir compartments may be connected together (perhaps with a snap-fit connection). The overall reservoir size may be thereby adjusted to suit the number of containers to be cooled and/or heated.

## Claims

1. A container (1,100,200,300) comprising at least one compartment unit comprising a compartment (9,11,109,111,209,311), wherein the or each compartment unit comprises a tray (5,7,105,207,305,307) pivotally mounted to a body (3,203) of the container with at least one pivotal connection (39,41,139,141), wherein said compartment (9,11,109,111,209,311) is provided in the tray (5,7,105,207,305,307) and wherein the tray is moveable relative to a closure element, the or each pivotal connection having a pivot axis extending perpendicularly to the plane of a compartment opening, **characterised in that** the or each pivotal connection (39,41,139,141) comprises a boss (27,45,127,145) fixed relative to one of the tray (5,7,105,207,305,307) and container body (2,203), and a resiliently deformable clip member (43,143) fixed relative to the other of the tray (5,7,105,207,305,307) and container body (2,203) for repeatedly snap fitting about said boss (27,45).

2. A container as claimed in claim 1, wherein the tray and container body are pivotally mounted to one another by means of two pivotal connections.

3. A container as claimed in claim 2, wherein the tray (5,7,105,207,305,307) provides two compartments (9,11,109,111,209,311) and wherein said two pivotal connections (39,41,139,141) are located relative to the compartments (9,11,109,111,209,311) so that rotation of said tray (5,7,105,207,305,307) about a first of said two connections (39,41,139,141) entirely removes the container body (3,203) from a first of said two compartments (9,11,109,111,209,311) so as to fully open said first compartment (9,11,109,111,209,311), and rotation of said tray (5,7,105,207,305,307) about a second of said two connections (39,41,139,141) entirely removes the container body (3,203) from a second of said two compartments (9,11,109,111,209,311) so as to fully open said second compartment (9,11,109,111,209,311).

4. A container as claimed in claim 3, wherein the pivotal connections (39,41,139,141) are located so that, when the container body (3,203) has been rotated about one of said pivotal connections (39,41,139,141) so as to fully open one of said compartments (9,11,109,111,209,311), the other of said compartments (9,11,109,111,209,311) remains closed or is partially closed.

5. A container as claimed in any one of the preceding claims, wherein said clip member (43,143) comprises one or more portions (51,53) which, in use, is moved in a camming action by said boss (27,45,127,145) as said boss is selectively moved into or out of snap fitted relationship with said clip member (43,143).

6. A container as claimed in any one of the preceding claims, wherein said boss (27,45,127,145) is rotatable relative to said clip member (43,143) when in snap fitted relationship therewith.

7. A container as claimed in claim 6, wherein the clip member (43,143) comprises a portion having a "C" shape or part-circular shape.

8. A container as claimed in claim 7, wherein at least one of the ends of the "C" shaped or part-circular shaped portion is resiliently moveable in a lateral direction away from the other of said ends.

9. A container as claimed in claim 8, wherein both ends of the "C" shaped or part-circular shaped portion are resiliently moveable in a lateral direction away from the other of said ends.

10. A container as claimed in any of the preceding claims, wherein the boss (27,45,127,145) of at least one pivotal connection is mounted on the tray.

11. A container as claimed in claim 10, wherein said boss (27,45,127,145) is mounted so as to project downwardly from an underside of the tray, and wherein the or each compartment of the tray is provided so as to open on an upperside of the tray.

12. A container as claimed in claim 10, wherein the clip member (43,143), for snap fitting about said boss (27,145,127,145) mounted on the tray, is mounted to a portion of the closure element located adjacent the underside of the tray.

13. A container as claimed in claim 12, wherein said clip member (43,143) is formed integrally with the container body.

## Patentansprüche

1. Behälter (1, 100, 200, 300), umfassend wenigstens eine Facheinheit, die ein Fach (9, 11, 109, 111, 209, 311) aufweist, wobei die oder jede Facheinheit eine Schale (5, 7, 105, 207, 305, 307) aufweist, die mit wenigstens einer Schwenkverbindung (39, 41, 139, 141) schwenkbar an einem Körper (3, 203) des Behälters montiert ist, wobei das genannte Fach (9, 11, 109, 111, 209, 311) in der Schale (5, 7, 105, 207, 305, 307) bereitgestellt ist und wobei die Schale relativ zu einem Verschlusselement bewegbar ist, wobei die oder jede Schwenkverbindung eine Schwenkachse hat, die lotrecht zur Ebene einer Fachöffnung verläuft, **dadurch gekennzeichnet, dass** die oder jede Schwenkverbindung (39, 41, 139, 141) einen runden Vorsprung (27, 45, 127, 145), der relativ zu der Schale (5, 7, 105, 207, 305, 307) oder dem Behälterkörper (2, 203) befestigt ist, und ein federnd verformbares Klammerelement (43, 143), das zum wiederholten Aufrasten um den genannten runden Vorsprung (27, 45) relativ zu dem Behälterkörper (2, 203) bzw. der Schale (5, 7, 105,207, 305, 307) befestigt ist, aufweist.

2. Behälter nach Anspruch 1, wobei die Schale und der Behälterkörper mittels zweier Schwenkverbindungen schwenkbar aneinander angebracht sind.

3. Behälter nach Anspruch 2, wobei die Schale (5, 7, 105, 207, 305, 307) zwei Fächer (9, 11, 109, 111, 209, 311) bereitstellt und wobei die genannten zwei Schwenkverbindungen (39, 41, 139, 141) relativ zu den Fächern (9, 11, 109, 111, 209, 311) positioniert sind, so dass die Drehung der genannten Schale (5, 7, 105, 207, 305, 307) um eine erste der genannten zwei Verbindungen (39, 41, 139, 141) den Behälterkörper (3, 203) vollkommen aus einem ersten der genannten zwei Fächer (9, 11, 109, 111, 209, 311) entfernt, um das genannte erste Fach (9, 11, 109, 111, 209, 311) ganz zu öffnen, und die Drehung der genannten Schale (5, 7, 105, 207, 305, 307) um eine zweite der genannten zwei Verbindungen (39, 41, 139, 141) den Behälterkörper (3, 203) vollkommen aus einem zweiten der genannten zwei Fächer (9, 11, 109, 111, 209, 311) entfernt, um das genannte zweite Fach (9, 11, 109, 111, 209, 311) ganz zu öffnen.

4. Behälter nach Anspruch 3, wobei die Schwenkverbindungen (39, 41, 139, 141) so positioniert sind, dass, wenn der Behälterkörper (3, 203) um eine der genannten Schwenkverbindungen (39, 41, 139, 141) gedreht wurde, um eines der genannten Fächer (9, 11, 109, 111, 209, 311) ganz zu öffnen, das andere der genannten Fächer (9, 11, 109, 111, 209, 311) geschlossen bleibt oder teilweise geschlossen ist.

5. Behälter nach einem der vorhergehenden Ansprüche, wobei das genannte Klammerelement (43, 143) einen oder mehrere Teile (51, 53) umfasst, die im Gebrauch von dem genannten runden Vorsprung (27, 45, 127, 145) in einer Nockenbewegung bewegt werden, während der genannte runde Vorsprung selektiv in eine oder aus einer Rastbeziehung mit dem genannten Klammerelement (43, 143) bewegt wird.

6. Behälter nach einem der vorhergehenden Ansprüche, wobei der genannte runde Vorsprung (27, 45, 127, 145) relativ zu dem genannten Klammerelement (43, 143) drehbar ist, wenn es damit in Rastbeziehung steht.

7. Behälter nach Anspruch 6, wobei das Klammerelement (43, 143) einen Teil mit einer C-Form oder einer teilkreisförmigen Form aufweist.

8. Behälter nach Anspruch 7, wobei wenigstens eines der Enden des C-förmigen oder teilkreisförmigen Teils federnd in einer seitlichen Richtung von dem anderen der genannten Enden weg bewegbar ist.

9. Behälter nach Anspruch 8, wobei beide Enden des C-förmigen oder teilkreisförmigen Teils federnd in einer seitlichen Richtung von dem anderen der genannten Enden weg bewegbar ist.

10. Behälter nach einem der vorhergehenden Ansprüche, wobei der runde Vorsprung (27, 45, 127, 145) von wenigstens einer Schwenkverbindung an der Schale angebracht ist.

11. Behälter nach Anspruch 10, wobei der genannte runde Vorsprung (27, 45, 127, 145) so montiert ist, dass er von einer Unterseite der Schale abwärts vorspringt, und wobei das oder jedes Fach der Schale so bereitgestellt ist, dass es sich an einer Oberseite der Schale öffnet.

12. Behälter nach Anspruch 10, wobei das Klammerelement (43, 143) zum Aufrasten um den genannten an der Schale montierten runden Vorsprung (27, 145, 127, 145) an einem Teil des Verschlusselements, das an die Unterseite der Schale angrenzend positioniert ist, angebracht ist.

13. Behälter nach Anspruch 12, wobei das genannte Klammerelement (43, 143) mit dem Behälterkörper einstückig ausgebildet ist.

## Revendications

1. Contenant (1, 100, 200, 300) comprenant au moins une unité compartiment comportant un compartiment (9, 11, 109, 111, 209, 311), ladite ou chaque unité compartiment comprenant un plateau (5, 7, 105, 207, 305, 307) monté de façon pivotante sur un corps (3, 203) du contenant à l'aide d'au moins un raccord de pivotement (39, 41, 139, 141), ledit compartiment (9, 11, 109, 111, 209, 311) étant monté dans le plateau (5, 7, 105, 207, 305, 307), et le plateau pouvant être déplacé par rapport à un élément de fermeture, ledit ou chaque raccord de pivotement ayant un axe-pivot lequel se prolonge perpendiculairement par rapport au plan d'une ouverture de compartiment, **caractérisé en ce que** ledit ou chaque raccord de pivotement (39, 41, 139, 141) comporte un bossage (27, 45, 127, 145) fixé par rapport à l'un des postes suivants, à savoir le plateau (5, 7, 105, 207, 305, 307) et le corps du contenant (2, 203), et un élément clip élastiquement déformable (43, 143) fixé par rapport à l'autre poste, à savoir le plateau (5, 7, 105, 207, 305, 307) et le corps du contenant (2, 203) pour procurer un emboîtement-pression de façon répétée autour dudit bossage (27, 45).

2. Contenant selon la revendication 1, le plateau et le corps du contenant étant montés de façon pivotante l'un par rapport à l'autre au moyen de deux raccords de pivotement.

3. Contenant selon la revendication 2, le plateau (5, 7, 105, 207, 305, 307) offrant deux compartiments (9, 11, 109, 111, 209, 311), et lesdits deux raccords de pivotement (39, 41, 139, 141) étant positionnés par rapport aux compartiments (9, 11, 109, 111, 209, 311) de sorte que la rotation dudit plateau (5, 7, 105, 207, 305, 307) autour d'un premier desdits deux raccords (39, 41, 139, 141) enlève complètement le corps du contenant (3, 203) d'un premier desdits deux compartiments (9, 11, 109, 111, 209, 311) de sorte à ouvrir entièrement ledit premier compartiment (9, 11, 109, 111, 209, 311), et la rotation dudit plateau (5, 7, 105, 207, 305, 307) autour d'un second desdits deux raccords (39, 41, 139, 141) enlève complètement le corps du contenant (3, 203) d'un second desdits deux compartiments (9, 11, 109, 111, 209, 311) de sorte à ouvrir entièrement ledit second compartiment (9, 11, 109, 111, 209, 311).

4. Contenant selon la revendication 3, les raccords de pivotement (39, 41, 139, 141) étant positionnés de sorte que, lorsque le corps du contenant (3, 203) a été tourné autour d'un desdits raccords de pivotement (39, 41, 139, 141) de façon à ouvrir entièrement l'un desdits compartiments (9, 11, 109, 111, 209, 311), l'autre desdits compartiments (9, 11, 109, 111, 209, 311) reste fermé ou est partiellement fermé.

5. Contenant selon l'une quelconque des revendications précédentes, ledit élément clip (43, 143) comprenant une ou plusieurs portions (51, 53) qui, en utilisation, sont déplacées par ledit bossage (27, 45, 127, 145) suivant une action par cames, au fur et à mesure que ledit bossage est déplacé sélectivement pour se mettre en relation d'emboîtement-pression avec ledit élément clip (43, 143) ou pour en sortir.

6. Contenant selon l'une quelconque des revendications précédentes, ledit bossage (27, 45, 127, 145) pouvant être tourné par rapport audit élément clip (43, 143) lorsqu'il se trouve en relation d'emboîtement-pression avec ce dernier.

7. Contenant selon la revendication 6, ledit élément clip (43, 143) comprenant une portion avec une forme en « C » ou une forme partiellement circulaire.

8. Contenant selon la revendication 7, l'une au moins des extrémités de la portion en forme de « C » ou de forme partiellement circulaire pouvant être déplacée élastiquement suivant un sens latéral afin de l'éloigner de l'autre desdites extrémités.

9. Contenant selon la revendication 8, les deux extrémités de la portion en forme de « C » ou de forme partiellement circulaire pouvant être déplacées élastiquement suivant un sens latéral afin de les éloigner de l'autre desdites extrémités.

10. Contenant selon l'une quelconque des revendications précédentes, le bossage (27, 45, 127, 145) d'au moins un raccord de pivotement étant monté sur le plateau.

11. Contenant selon la revendication 10, ledit bossage (27, 45, 127, 145) étant monté de sorte à faire saillie vers le bas à partir d'une face inférieure du plateau, et ledit ou chaque compartiment du plateau étant conçu de façon à s'ouvrir sur une face supérieure du plateau.

12. Contenant selon la revendication 10, l'élément clip (43, 143), destiné à se mettre en emboîtement-pression autour dudit bossage (27, 145, 127, 145) monté sur le plateau, étant monté sur une portion de l'élément de fermeture disposé en position adjacente à la face inférieure du plateau.

13. Contenant selon la revendication 12, ledit élément clip (43, 143) faisant partie intégrante du corps de contenant.
